# EUROPÄISCHE PATENTSCHRIFT

(11) **EP 4 071 037 B1**
(45) Veröffentlichungstag und Bekanntmachung des Hinweises auf die Patenterteilung: **25.12.2024**
(21) Anmeldenummer: 22170048.7
(22) Anmeldetag: 25.02.2019
(51) Int. Cl.: B62J 7/00, B62J 7/04

(54) **GEPÄCKTRÄGER FÜR EIN ZWEIRAD**
LUGGAGE RACK FOR A BICYCLE
PORTE-BAGAGES POUR DEUX-ROUES

(30) Priorität: 29.03.2018 DE 202018101779 U
(43) Veröffentlichungstag der Anmeldung: 12.10.2022
(62) Teilanmeldung aus: 19159128.8
(73) Patentinhaber: SKS metaplast Scheffer-Klute GmbH, 59846 Sundern (DE)
(72) Erfinder: Kordes, Sven, 59846 Sundern (DE); Grabski, Karsten, 59469 Ense (DE); Nöcker, Alexander, 59846 Sundern (DE)
(74) Vertreter: Schäperklaus, Jochen

(56) Entgegenhaltungen:
- EP-A2- 2 609 000
- FR-A1- 2 516 468
- NZ-A- 579 236

## Beschreibung

Die vorliegende Erfindung betrifft einen Gepäckträger für ein Zweirad, insbesondere für ein Fahrrad, gemäß dem Oberbegriff des Anspruchs 1 sowie die Anordnung eines derartigen Gepäckträgers an einem Zweirad.

Gepäckträger für ein Zweirad sind bekannt. Sie umfassen beispielsweise ein langgestrecktes, mehrfach gebogenes Rohr, von dem sich im an dem Zweirad angebrachten Zustand des Gepäckträgers an jeder der beiden Seiten beispielsweise des Hinterrades des Fahrrads jeweils ein Abschnitt erstreckt. Die beiden Abschnitte sind dabei in der Regel durch einen sich in Fahrradquerrichtung erstreckenden Querabschnitt des Rohres miteinander verbunden. Die beiden an den Seiten des Rades angeordneten Abschnitte verlaufen von dem Querabschnitt ein Stück horizontal und anschließend nach unten, wo sie Öffnungen für die Verbindung mit den Ausfallenden des Rahmens des Fahrrads aufweisen. Es sind weiterhin stegförmige Verbindungsmittel vorgesehen, die die beiden horizontalen Abschnitte beabstandet zu dem Querabschnitt miteinander verbinden. Die stegförmigen Verbindungsmittel sind dabei an die horizontalen Abschnitte angeschweißt.

Die Verschweißung der Verbindungsmittel mit den horizontalen Abschnitten erweist sich als sehr aufwendig, insbesondere als sehr lohnkostenintensiv.

Ein Gepäckträger der eingangs genannten Art ist aus der NZ 579 236 A bekannt. Der darin beschriebene Gepäckträger umfasst ein langgestrecktes, mehrfach gebogenes Rohr, von dem sich im an dem Zweirad angebrachten Zustand des Gepäckträgers an jeder der beiden Seiten des Hinterrades des Fahrrads jeweils ein Abschnitt erstreckt. Die beiden Abschnitte sind durch einen sich in Fahrradquerrichtung erstreckenden Querabschnitt des Rohres miteinander verbunden. An den beiden Abschnitten ist eine Abdeckung angebracht. An der Unterseite der Abdeckung sind zu diesem Zweck zwei schwenkbaren Halteklammern vorgesehen, die jeweils eine Ausnehmung aufweisen, in die einer der Abschnitte passend eingebracht werden kann. Durch das Eindrücken eines Auslösestifts können die Halteklammern aus der Eingriffsstellung herausgeschwenkt werden, so dass die Abdeckung abgenommen werden kann.

Aus der EP 2 609 000 A2 ist ein Gepäckträger bekannt, der zumindest teilweise die gleichen Merkmale wie der aus der NZ 579 236 A bekannte Gepäckträger aufweist.

Ein weiterer Gepäckträger ist aus der FR 2 516 468 A1 bekannt. Der darin beschriebene Gepäckträger umfasst ein erstes langgestrecktes, mehrfach gebogenes Befestigungselement und ein zweites langgestrecktes, mehrfach gebogenes Befestigungselement. Sowohl von dem ersten Befestigungselement als auch von dem zweiten Befestigungselement erstreckt sich im an dem Zweirad angebrachten Zustand des Gepäckträgers an jeder der beiden Seiten des Hinterrades des Fahrrads jeweils ein Abschnitt. Jeweils an den unteren Enden der beiden Abschnitte des ersten Befestigungselements sind Bohrungen angeordnet, die zur Anbringung der unteren Enden an den Ausfallenden des Rahmens des Zweirads verwendet werden können. Die beiden Abschnitte des ersten Befestigungselements sind an ihren oberen, am hinteren Ende des Gepäckträgers angeordneten Enden durch einen sich in Fahrradquerrichtung erstreckenden Querabschnitt des ersten Befestigungselements miteinander verbunden. Gleichzeitig sind die beiden Abschnitte des ersten Befestigungselements unterhalb des Querabschnitts des ersten Befestigungselements mit den hinteren Enden der beiden Abschnitte des zweiten Befestigungselements über jeweils eine Schraubverbindung verbunden. Zusätzlich sind die beiden vorderen Enden der beiden Abschnitte des zweiten Befestigungselements über einen Querabschnitt des zweiten Befestigungselements miteinander verbunden.

Das der vorliegenden Erfindung zugrundeliegende Problem ist die Schaffung eines Gepäckträgers der eingangs genannten Art, der einfacher, insbesondere kostengünstiger herstellbar ist.

Dies wird erfindungsgemäß durch einen Gepäckträger der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Mittel zur Anbringung des Gepäckträgers an dem Zweirad Mittel zur Befestigung des Gepäckträgers an einem Radschützer des Zweirades oder an einer unter dem Radschützer verlaufende Strebe umfassen. Als Anbringungsbereich für den Gepäckträger können somit ein gegebenenfalls stabiler, beispielsweise aus Metall bestehender Radschützer, oder eine unterhalb des Radschützers angeordnete Strebe verwendet werden, wobei die Strebe insbesondere aus Metall bestehen kann.

Durch die mechanische Verbindung zwischen den beiden Abschnitten des einen Befestigungselements oder zwischen zwei der mindestens zwei Befestigungselementen wird eine hohe Biegesteifigkeit der beiden Schenkel des Gepäckträgers erreicht, ohne dabei die aus dem Stand der Technik bekannten, aufwendigen stoffschlüssigen Verbindungen vorsehen zu müssen.

Es kann vorgesehen sein, dass die Verbindungsmittel derart gestaltet sind, dass durch die Verbindungsmittel die beiden Abschnitte des einen Befestigungselements oder zwei der mindestens zwei Befestigungselemente über mindestens eine Schraubverbindung, vorzugsweise zwei Schraubverbindungen, miteinander verbunden sind. Eine Schraubverbindung ist einfach zu realisieren.

Es besteht die Möglichkeit, dass die Verbindungsmittel zwei Aufnahmen aufweisen, in denen jeweils einer der beiden Abschnitte des einen Befestigungselements oder jeweils eines der mindestens zwei Befestigungselemente angeordnet und festgelegt ist oder angeordnet und festgelegt werden kann. Dabei kann mindestens eine der Aufnahmen oder jede der beiden Aufnahmen durch zwei Teile gebildet werden, die an den Querschnitt des Befestigungselements angepasste Aussparungen aufweisen, so dass die Teile zumindest abschnittsweise formschlüssig an dem Befestigungselement anliegen können. Vorzugsweise kann dabei die Festlegung einer der beiden Abschnitte des einen Befestigungselements oder eines der mindestens zwei Befestigungselemente in jeder der Aufnahmen durch eine Schraubverbindung erfolgen, wobei durch die Schraubverbindung insbesondere die beiden Teile an das Befestigungselement angedrückt werden. Die beiden Abschnitte des Befestigungselements oder zwei der mindestens zwei Befestigungselemente werden also durch eine Klemmvorrichtung miteinander verbunden, wobei die Teile der Klemmvorrichtung durch eine einfache Schraubverbindung in einen klemmenden Zustand überführt werden.

Es kann vorgesehen sein, dass die Verbindungsmittel als eine Befestigungsbrücke, insbesondere als eine stegförmige Befestigungsbrücke, ausgebildet sind, die sich im an dem Zweirad angebrachten Zustand des Gepäckträgers von einer Seite des Rades zur anderen Seite des Rades erstreckt. Dabei können die Aufnahmen jeweils in einem endseitigen Bereich der Befestigungsbrücke angeordnet sein.

Es kann vorgesehen sein, dass die Verbindungsmittel eine Abdeckung umfassen, die im an dem Zweirad angebrachten Zustand des Gepäckträgers insbesondere die Oberseite der Verbindungsmittel abdecken kann. Dabei kann vorgesehen sein, dass die Abdeckung im an dem Zweirad angebrachten Zustand des Gepäckträgers auf ihrer Oberseite eine Kennzeichnung wie beispielsweise ein Logo aufweist oder aufweisen kann. Weiterhin kann vorgesehen sein, dass die Abdeckung im an dem Zweirad angebrachten Zustand des Gepäckträgers auf ihrer Rückseite einen Rückstrahler und/oder ein Rücklicht aufweist oder aufweisen kann. Zusätzlich besteht die Möglichkeit, dass die Abdeckung im an dem Zweirad angebrachten Zustand des Gepäckträgers auf ihrer Vorderseite eine Plakette, insbesondere eine Plakette mit Kennzeichnungen nach DIN EN ISO 11243, aufweist oder aufweisen kann. Durch die Abdeckung können somit die Verbindungsmittel dazu dienen, optionale Anbauteile an dem Gepäckträger anzubringen.

Alternativ kann vorgesehen sein, dass die Verbindungsmittel im an dem Zweirad angebrachten Zustand des Gepäckträgers auf ihrer Oberseite eine Kennzeichnung wie beispielsweise ein Logo aufweisen oder aufweisen können. Weiterhin kann vorgesehen sein, dass die Verbindungsmittel im an dem Zweirad angebrachten Zustand des Gepäckträgers auf ihrer Rückseite einen Rückstrahler und/oder ein Rücklicht aufweisen oder aufweisen können. Es besteht auch die Möglichkeit, dass die Verbindungsmittel im an dem Zweirad angebrachten Zustand des Gepäckträgers auf ihrer Vorderseite eine Plakette, insbesondere eine Plakette mit Kennzeichnungen nach DIN EN ISO 11243, aufweisen oder aufweisen können. Auch ohne Abdeckung können somit die Verbindungsmittel dazu dienen, optionale Anbauteile an dem Gepäckträger anzubringen.

Es kann vorgesehen sein, dass Mittel zur Anbringung des Gepäckträgers an dem Zweirad im an dem Zweirad angebrachten Zustand des Gepäckträgers jeweils an den unteren Enden der beiden Abschnitte des einen Befestigungselements oder jeweils an den unteren Enden der mindestens zwei Befestigungselemente angeordnet sind, insbesondere in Form von Bohrungen, die zur Anbringung der unteren Enden an den Ausfallenden des Rahmens des Zweirads verwendet werden können. Auf diese Weise kann der Gepäckträger im Bereich der Ausfallenden fest mit dem Rahmen des Zweirads verbunden werden.

Es kann vorgesehen sein, dass der Gepäckträger ein Befestigungselement umfasst, das einen ersten Abschnitt, einen zweiten Abschnitt und einen diese verbindenden Querabschnitt aufweist, wobei sich im an dem Zweirad angebrachten Zustand des Gepäckträgers an jeder der beiden Seiten eines Rades jeweils einer der beiden Abschnitte erstreckt. Eine derartige Ausführungsform eines erfindungsgemäßen Gepäckträgers ist sehr stabil.

Alternativ könnte vorgesehen sein, anstelle eines Befestigungselements zwei Befestigungselemente vorzusehen, wobei dann ein jedes der beiden Befestigungselement im Wesentlichen die Form eines der beiden Abschnitte eines einteiligen Befestigungselements aufweisen könnte. Die beiden Befestigungselemente könnten dann im Bereich des Querabschnitts miteinander verbunden sein, beispielsweise durch eine Schraubverbindung. Weiterhin besteht auch die Möglichkeit, mehr als zwei Befestigungselemente vorzusehen. Beispielsweise können auch auf jeder Seite des Rades zwei oder mehr Befestigungselemente miteinander verbunden werden, beispielsweise ineinander gesteckt werden.

Es besteht die Möglichkeit, dass die Mittel zur Befestigung des Gepäckträgers eine Aufnahme für den Querabschnitt des Befestigungselements aufweisen, wobei die Aufnahme insbesondere zwei Teile aufweist, die an den Querschnitt des Querabschnitts angepasste Aussparungen aufweisen, so dass die Teile zumindest abschnittsweise formschlüssig an dem Querabschnitt anliegen oder anliegen können. Dabei können die Mittel zur Befestigung des Gepäckträgers mindestens eine Schraubverbindung aufweisen. Insbesondere kann eine erste Schraubverbindung die Teile an den Querabschnitt des Befestigungselements andrücken und diesen damit in der Aufnahme festlegen. Vorzugsweise kann die erste Schraubverbindung gleichzeitig den Gepäckträger mit dem Radschützer oder mit einer unter dem Radschützer verlaufenden Strebe verbinden. Auf diese Weise wird mit einfachen Mitteln erreicht, dass der Gepäckträger sicher an dem Radschützer oder einer unterhalb des Radschützers angeordneten Strebe befestigt wird.

Es besteht die Möglichkeit, dass eine zweite Schraubverbindung die Verbindungsmittel mit dem Radschützer verbinden kann. Diese weitere Befestigung des Gepäckträgers an dem Radschützer kann die Stabilität des Gepäckträgers im montierten Zustand erhöhen.

Es kann vorgesehen sein, dass das mindestens eine Befestigungselement als Rohr ausgebildet ist und/oder dass die Verbindungsmittel aus einem Leichtmetall oder aus einer Leichtmetalllegierung, insbesondere aus Aluminium, bestehen oder dass die Verbindungsmittel ein Leichtmetall oder eine Leichtmetalllegierung, insbesondere Aluminium, umfassen. Ein Rohr kann bei entsprechender Gestaltung eine große Festigkeit bei geringem Gewicht gewährleisten. Beispielsweise kann das aus dem Befestigungselement bestehende Grundgerüst des Gepäckträgers in einer vollautomatischen Rohrbiegemaschine gebogen werden, so dass durch den Verzicht auf manuelle Verfahrensschritte Kosten eingespart werden können. Durch die Verwendung eines Leichtmetalls oder einer Leichtmetalllegierung für die Verbindungsmittel kann die erforderliche Biegesteifigkeit gewährleistet werden, ohne dass dabei der Gepäckträger ein zu großes Gewicht aufweist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Ansicht von hinten auf einen Teil eines Fahrrads mit einem erfindungsgemäßen Gepäckträger;
- Fig. 2: eine Schnittansicht gemäß den Pfeilen II - II in Fig. 1;
- Fig. 3: eine Detailansicht gemäß dem Pfeil III in Fig. 2;
- Fig. 4: eine perspektivische Ansicht des Teil des Fahrrads mit dem erfindungsgemäßen Gepäckträger gemäß Fig. 1;
- Fig. 5: eine perspektivische Explosionsansicht des Teil des Fahrrads mit dem erfindungsgemäßen Gepäckträger gemäß Fig. 1;
- Fig. 6: eine Draufsicht auf den erfindungsgemäßen Gepäckträger mit einer Strebe des Fahrrads;
- Fig. 7: eine Seitenansicht auf den erfindungsgemäßen Gepäckträger mit der Strebe des Fahrrads gemäß Fig. 6;
- Fig. 8: eine perspektivische Explosionsansicht des erfindungsgemäßen Gepäckträgers und der Strebe des Fahrrads gemäß Fig. 6;
- Fig. 9: eine perspektivische Explosionsansicht von Verbindungsmitteln des erfindungsgemäßen Gepäckträgers;
- Fig. 10: eine perspektivische Ansicht der Verbindungsmittel des erfindungsgemäßen Gepäckträgers;
- Fig. 11: einen Schnitt durch die Verbindungsmittel des erfindungsgemäßen Gepäckträgers;
- Fig. 12: eine Seitenansicht auf Mittel zur Befestigung des erfindungsgemäßen Gepäckträgers;
- Fig. 13: eine Explosionsansicht der Mittel zur Befestigung des erfindungsgemäßen Gepäckträgers;
- Fig. 14: einen Schnitt durch die Mittel zur Befestigung des erfindungsgemäßen Gepäckträgers;
- Fig. 15: eine perspektivische Ansicht des an einem Hinterrad eines Fahrrads angebrachten erfindungsgemäßen Gepäckträgers mit einem Anbauteil;
- Fig. 16: eine Seitenansicht des an einem Hinterrad eines Fahrrads angebrachten erfindungsgemäßen Gepäckträgers mit dem Anbauteil.

In den Figuren sind gleiche und funktional gleiche Teile mit gleichen Bezugszeichen versehen.

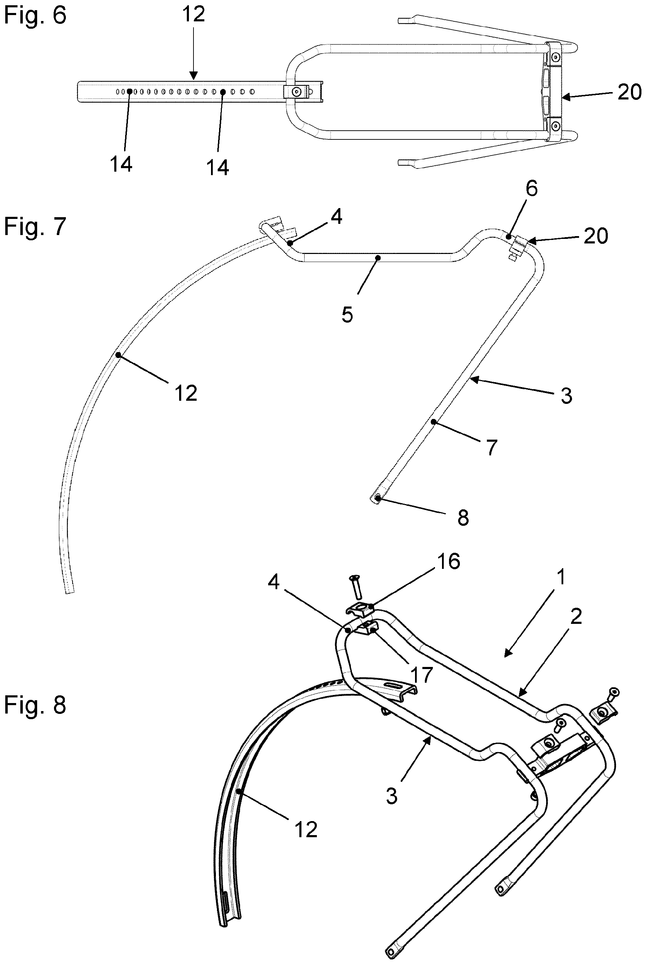

Ein erfindungsgemäßer Gepäckträger umfasst ein langgestrecktes, mehrfach gebogenes Befestigungselement 1, das insbesondere als Rohr ausgebildet ist (siehe beispielsweise Fig. 8). Das Befestigungselement 1 kann aus Aluminium bestehen. Das als Rohr mit einem kreisförmigen Querschnitt ausgebildete Befestigungselement 1 kann einen Durchmesser von 10 mm und eine Wandstärke von 3 mm aufweisen.

Es besteht durchaus die Möglichkeit anstelle eines Rohres mit kreisförmigem Querschnitt ein Rohr mit einem ovalen oder einem anders gestalteten Querschnitt vorzusehen. Weiterhin besteht auch die Möglichkeit, anstelle eines Rohres ein Befestigungselement aus einem Vollmaterial mit kreisförmigem oder ovalem oder anders geformten Querschnitt vorzusehen.

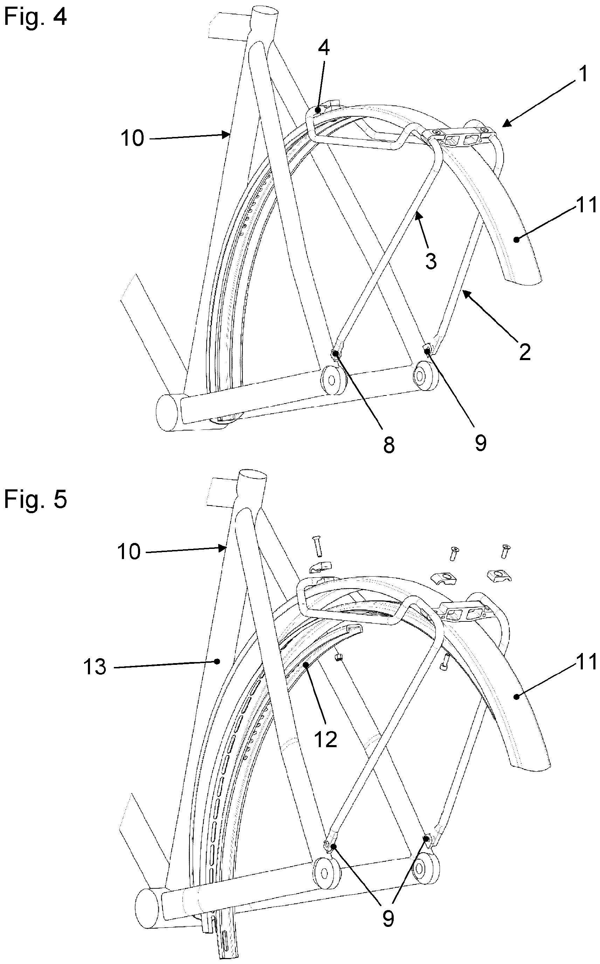

Das Befestigungselement 1 weist einen ersten Abschnitt 2 und einen zweiten, zu dem ersten weitgehend parallelen Abschnitt 3 auf, wobei die beiden Abschnitte 2, 3 über einen Querabschnitt 4 des Befestigungselements 1 miteinander verbunden sind (siehe Fig. 8). Dabei erstreckt sich im abgebildeten Ausführungsbeispiel der erste Abschnitt 2 an der rechten Seite des nicht abgebildeten Hinterrades des Fahrrades, wohingegen sich der zweite Abschnitt 3 an der linken Seite des Hinterrades des Fahrrades erstreckt (siehe Fig. 4). Der Querabschnitt 4 verbindet in Fahrradquerrichtung die beiden Abschnitte 2, 3 miteinander.

Es besteht durchaus die Möglichkeit, anstelle eines Befestigungselements 1 zwei (nicht abgebildete) Befestigungselemente vorzusehen, wobei dann ein jedes der beiden Befestigungselement im Wesentlichen die Form eines der beiden Abschnitte 2, 3 aufweisen kann. Die beiden Befestigungselemente können dann im Bereich des Querabschnitts 4 miteinander verbunden sein, beispielsweise durch eine Schraubverbindung.

Weiterhin besteht auch die Möglichkeit, mehr als zwei Befestigungselemente vorzusehen. Beispielsweise können auch auf jeder Seite des Rades zwei oder mehr Befestigungselemente miteinander verbunden werden, beispielsweise ineinander gesteckt werden.

Der erste und der zweite Abschnitte 2, 3 sind weitgehend gleich geformt und weisen anschließend an den Querabschnitt 4 einen im am Fahrrad verbauten Zustand horizontal nach hinten verlaufenden Bereich 5, einen sich daran anschließenden, leicht nach oben versetzten Bereich 6 und einen sich daran anschließenden nach unten und leicht nach vorne verlaufenden Bereich 7 auf (siehe dazu Fig. 7). Am unteren Ende des Bereichs 7 ist in jedem der Abschnitte 2, 3 eine Öffnung 8 vorgesehen, durch eine Schraube zur Befestigung des Gepäckträgers an einem Ausfallende 9 des Rahmens 10 des Fahrrads hindurchgeführt werden kann (siehe Fig. 4, Fig. 5 und Fig. 7).

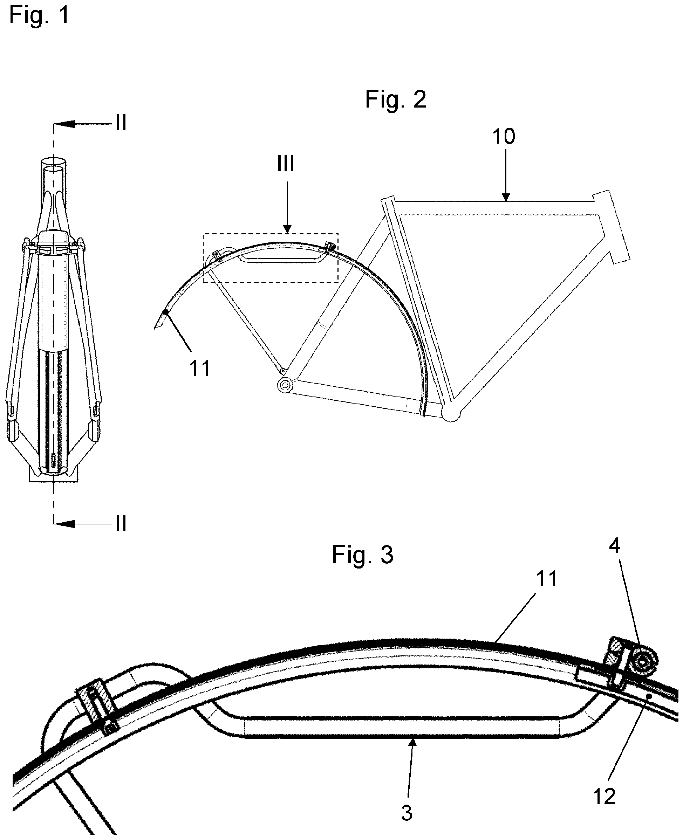

Das abgebildete Ausführungsbeispiel des Fahrrads weist an dem Hinterrad einen Radschützer 11 auf, unter dem eine Strebe 12, insbesondere eine metallische Strebe, verläuft, die sich von dem unteren Ende des Sitzrohres 13 des Rahmens 10 nach oben und nach hinten erstreckt. Die Strebe 12 endet im abgebildeten Ausführungsbeispiel kurz hinter dem Querabschnitt 4 des Befestigungsteils 1 (siehe dazu Fig. 3, Fig. 5 und Fig. 7). Die Strebe 12 weist in Längsrichtung zueinander beabstandete Löcher 14 auf (siehe Fig. 6).

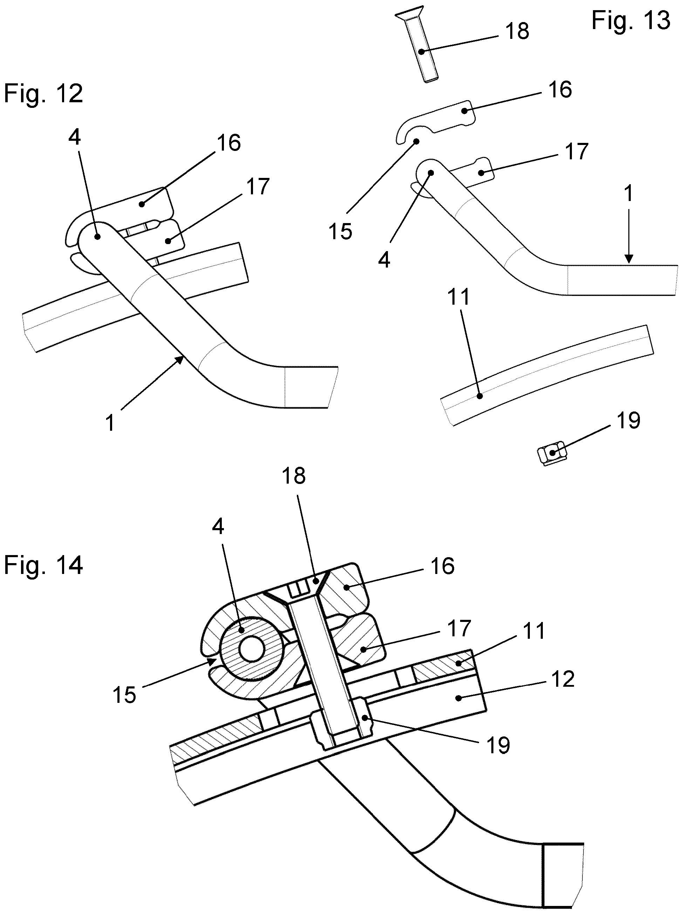

Der Gepäckträger umfasst Mittel zur Anbringung des Gepäckträgers an dem Zweirad. Diese Mittel zur Anbringung umfassen einerseits die Öffnungen 8 an den unteren Enden der Bereiche 7 der Abschnitte 2, 3, wobei diese Öffnungen 8 eine Befestigung an den Ausfallenden 9 ermöglichen. Die Mittel zur Anbringung umfassen weiterhin eine Aufnahme 15, die durch zwei einander gegenüberliegende, halbzylindrische Aussparungen in zwei Teilen 16, 17 gebildet wird (siehe dazu Fig. 13). Der Querabschnitt 4 des Befestigungsteils 1 kann in die von den Aussparungen gebildete Aufnahme 15 eingebracht und dort durch eine Schraubverbindung festgelegt werden. Dabei entspricht der Querschnitt des Querabschnitts 4 der Form der Aussparungen in den Teilen 16, 17.

Die Schraubverbindung wird durch eine Schraube 18 und eine Mutter 19 realisiert, wobei die Mutter 19 unter der Strebe 12 angeordnet wird und die Schraube 18 durch die beiden Teile 16, 17, den Radschützer 11 und die Strebe 12 hindurch geführt wird (siehe Fig. 14). Durch das Festziehen der Schraube 18 werden der Querabschnitt 4 und damit der Gepäckträger an dem Radschützer 11 und der Strebe 12 befestigt.

Der Radschützer 11 kann insbesondere aus Kunststoff bestehen. Wenn stattdessen ein Radschützer aus Metall, insbesondere aus Aluminium verwendet wird, kann unter Umständen auf die Strebe 12 verzichtet werden, weil dann der Radschützer ausreichend stabil ist, um auf den Gepäckträger einwirkende Kräfte aufzunehmen.

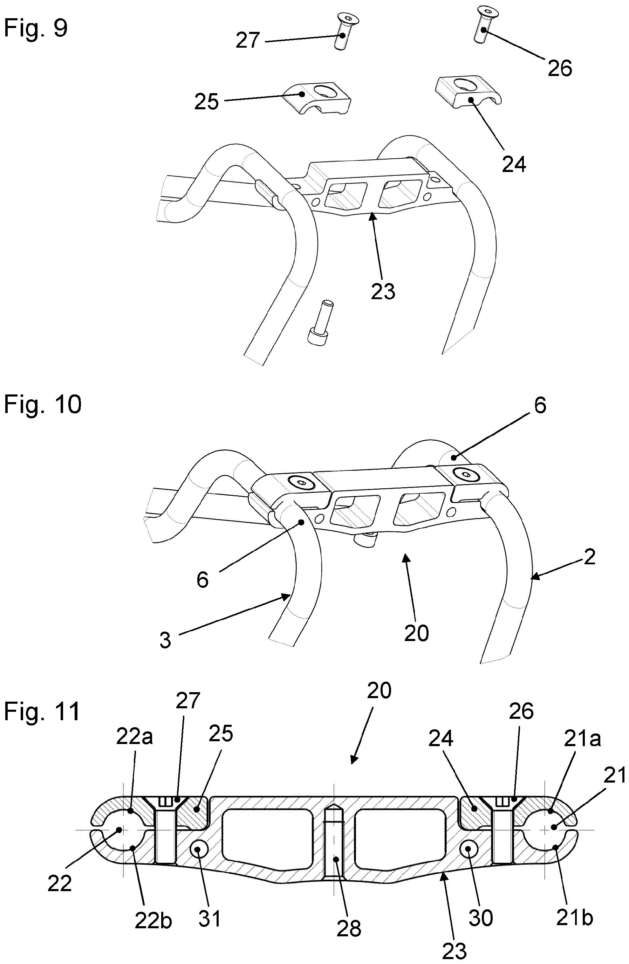

Der Gepäckträger umfasst weiterhin eine als Verbindungsmittel 20 dienende Befestigungsbrücke, die sich stegförmig zwischen den beiden leicht nach oben versetzten Bereichen 6 der Abschnitte 2, 3 des Befestigungselements 1 erstreckt (siehe Fig. 9 bis Fig. 11). Die Befestigungsbrücke kann insbesondere aus Aluminium bestehen.

Die Befestigungsbrücke weist in ihren Endbereichen jeweils eine Aufnahme 21, 22 auf, durch die sich im montierten Zustand die Bereiche 6 der Abschnitte 2, 3 des Befestigungselements 1 erstrecken. Die Aufnahmen 21, 22 sind jeweils durch zwei Teile gebildet, die Aussparungen 21a, 21b; 22a, 22b aufweisen, die sich im montierten Zustand zu den Aufnahmen 21, 22 ergänzen.

Eines der beiden Teile ist ein sich über die gesamte Länge der Befestigungsbrücke erstreckendes Basisteil 23, das die Aussparungen 21b, 22b aufweist. Auf dieses kann jeweils im Endbereich ein mit einer Aussparung 21a, 22a versehenes Aufsatzteil 24, 25 aufgebracht werden. Dabei entspricht der Querschnitt der Bereiche 6 der Abschnitte 2, 3 des Befestigungselements 1 der Form der Aussparungen 21a, 21b; 22a, 22b in dem Basisteil 23 und den Aufsatzteilen 24, 25.

Es sind Schraubverbindungen vorgesehen, mit denen die Bereiche 6 der Abschnitte 2, 3 des Befestigungselements 1 in den Aufnahmen 21, 22 kraft- und formschlüssig festgelegt werden können. Die Schraubverbindungen umfassen beispielsweise jeweils eine Schraube 26, 27 und mit diesen zusammenwirkende Gewindebohrungen in dem Basisteil 23. Durch Anziehen der Schrauben 26, 27 werden die Aufsatzteile 24, 25 von oben gegen die Bereiche 6 der Abschnitte 2, 3 des Befestigungselements 1 gepresst und legen diese fest.

Die Mittel zur Anbringung des Gepäckträgers an dem Zweirad umfassen weiterhin eine Gewindebohrung 28 in der Mitte des Basisteils 23 der Verbindungsmittel 20. In diese Gewindebohrung 28 kann von unten durch den Radschützer 11 eine Schraube 29 eingeschraubt werden, die damit den Gepäckträger an dem Radschützer 11 befestigt (siehe Fig. 9 bis Fig. 11).

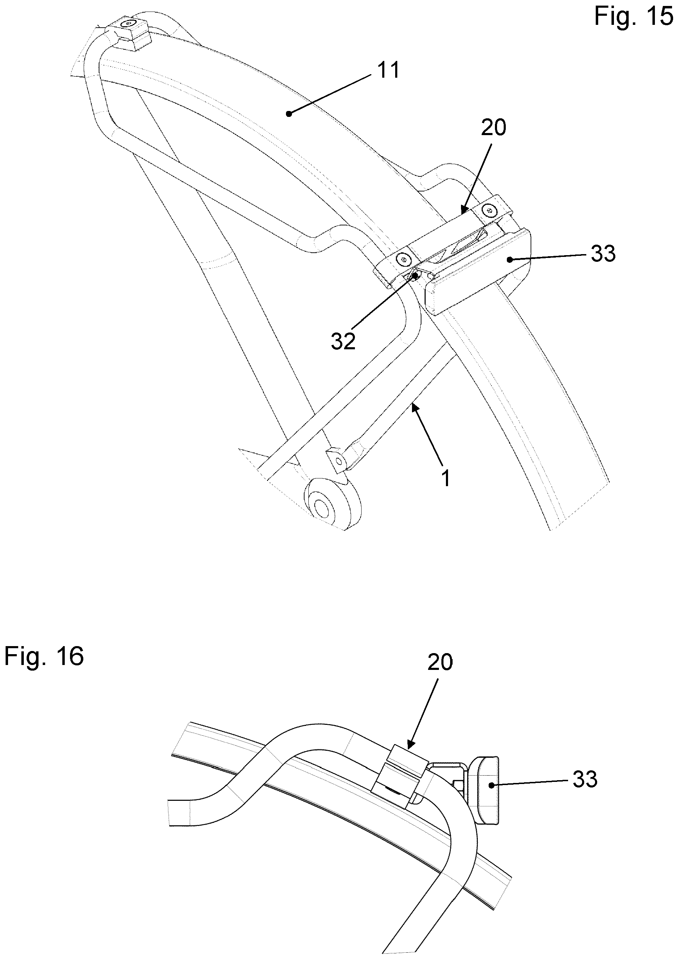

An dem Basisteil 23 der Verbindungsmittel 20 sind weiterhin zwei im montierten Zustand nach hinten offene Gewindebohrungen 30, 31 vorgesehen, in die Schrauben 32 zur Anbringung eines Rückstrahlers 33 oder eines Rücklichts eingeschraubt werden können (siehe Fig. 11, Fig. 15 und Fig. 16). Weiterhin kann auf der Oberseite des Basisteils 23 eine nicht abgebildete Kennzeichnung wie beispielsweise ein Logo aufgebracht werden. An der im montierten Zustand vorderen Seite des Basisteils 23 kann eine nicht abgebildete Plakette, insbesondere eine Plakette mit Kennzeichnungen nach DIN EN ISO 11243, angebracht werden.

Es besteht die Möglichkeit, an den Verbindungsmitteln 20 eine nicht abgebildete Abdeckung anbringen, die im an dem Zweirad angebrachten Zustand des Gepäckträgers insbesondere die Oberseite der Verbindungsmittel 20 abdecken kann. An dieser Abdeckung können dann rückseitig ein Rückstrahler oder ein Rücklicht angebracht werden. Weiterhin kann die Abdeckung gegebenenfalls auch zur Anbringung einer Kennzeichnung wie beispielsweise eines Logos auf ihrer Oberseite und zur Anbringung einer Plakette an ihrer Vorderseite dienen.

## Patentansprüche

1. Gepäckträger für ein Zweirad, insbesondere für ein Fahrrad, umfassend
- mindestens ein langgestrecktes, mehrfach gebogenes Befestigungselement (1), wobei sich im an dem Zweirad angebrachten Zustand des Gepäckträgers an jeder der beiden Seiten eines Rades jeweils ein Abschnitt (2, 3) des einen Befestigungselements (1) erstreckt, oder wobei mindestens zwei Befestigungselemente vorgesehen sind und sich an jeder der beiden Seiten des Rades mindestens eines der mindestens zwei Befestigungselemente erstreckt,
- Mittel zur Anbringung des Gepäckträgers an dem Zweirad,
- Verbindungsmittel (20), die die beiden Abschnitte (2, 3) des einen Befestigungselements (1) oder die beiden Befestigungselemente miteinander verbinden, wobei die Verbindungsmittel (20) derart gestaltet sind, dass durch die Verbindungsmittel (20) die beiden Abschnitte (2, 3) des einen Befestigungselements (1) oder zwei der mindestens zwei Befestigungselemente kraft- und/oder formschlüssig miteinander verbunden sind,
**dadurch gekennzeichnet, dass** die Mittel zur Anbringung des Gepäckträgers an dem Zweirad Mittel zur Befestigung des Gepäckträgers an einem Radschützer (11) des Zweirades oder an einer unter dem Radschützer verlaufende Strebe (12) umfassen.

2. Gepäckträger nach Anspruch 1, **dadurch gekennzeichnet, dass** die Verbindungsmittel (20) derart gestaltet sind, dass durch die Verbindungsmittel (20) die beiden Abschnitte (2, 3) des einen Befestigungselements (1) oder zwei der mindestens zwei Befestigungselemente über mindestens eine Schraubverbindung, vorzugsweise zwei Schraubverbindungen, miteinander verbunden sind.

3. Gepäckträger nach einem der Ansprüche 1 oder 2, **dadurch gekennzeichnet, dass** die Verbindungsmittel (20) zwei Aufnahmen (21, 22) aufweisen, in denen jeweils einer der beiden Abschnitte (2, 3) des einen Befestigungselements (1) oder jeweils eines der mindestens zwei Befestigungselemente angeordnet und festgelegt ist oder angeordnet und festgelegt werden kann, wobei insbesondere mindestens eine der Aufnahmen (21, 22) oder jede der beiden Aufnahmen (21, 22) durch zwei Teile gebildet wird, die an den Querschnitt des Befestigungselements (1) angepasste Aussparungen (21a, 21b; 22a, 22b) aufweisen, so dass die Teile zumindest abschnittsweise formschlüssig an dem Befestigungselement (1) anliegen können.

4. Gepäckträger nach Anspruch 3, **dadurch gekennzeichnet, dass** die Festlegung einer der beiden Abschnitte (2, 3) des einen Befestigungselements (1) oder eines der mindestens zwei Befestigungselemente in jeder der Aufnahmen (21, 22) durch eine Schraubverbindung erfolgt, wobei durch die Schraubverbindung insbesondere die beiden Teile an das Befestigungselement (1) angedrückt werden.

5. Gepäckträger nach einem der Ansprüche 1 bis 4, **dadurch gekennzeichnet, dass** die Verbindungsmittel (20) als eine Befestigungsbrücke, insbesondere eine stegförmige Befestigungsbrücke, ausgebildet sind, die sich im an dem Zweirad angebrachten Zustand des Gepäckträgers von einer Seite des Rades zur anderen Seite des Rades erstreckt, insbesondere wobei die Aufnahmen (21, 22) jeweils in einem endseitigen Bereich der Befestigungsbrücke angeordnet sind.

6. Gepäckträger nach einem der Ansprüche 1 bis 5, **dadurch gekennzeichnet, dass** die Verbindungsmittel (20) eine Abdeckung umfassen, die im an dem Zweirad angebrachten Zustand des Gepäckträgers insbesondere die Oberseite der Verbindungsmittel (20) abdecken kann.

7. Gepäckträger nach Anspruch 6, **dadurch gekennzeichnet, dass** die Abdeckung im an dem Zweirad angebrachten Zustand des Gepäckträgers
- auf ihrer Oberseite eine Kennzeichnung wie beispielsweise ein Logo und/oder
- auf ihrer Rückseite einen Rückstrahler (33) und/oder ein Rücklicht und/oder
- auf ihrer Vorderseite eine Plakette, insbesondere eine Plakette mit Kennzeichnungen nach DIN EN ISO 11243
aufweist oder aufweisen kann.

8. Gepäckträger nach einem der Ansprüche 1 bis 7, **dadurch gekennzeichnet, dass** die Verbindungsmittel (20) im an dem Zweirad angebrachten Zustand des Gepäckträgers
- auf ihrer Oberseite eine Kennzeichnung wie beispielsweise ein Logo und/oder
- auf ihrer Rückseite einen Rückstrahler (33) und/oder ein Rücklicht und/oder
- auf ihrer Vorderseite eine Plakette, insbesondere eine Plakette mit Kennzeichnungen nach DIN EN ISO 11243
- aufweisen oder aufweisen können.

9. Gepäckträger nach einem der Ansprüche 1 bis 8, **dadurch gekennzeichnet, dass** Mittel zur Anbringung des Gepäckträgers an dem Zweirad im an dem Zweirad angebrachten Zustand des Gepäckträgers jeweils an den unteren Enden der beiden Abschnitte (2, 3) des einen Befestigungselements (1) oder jeweils an den unteren Enden der mindestens zwei Befestigungselemente angeordnet sind, insbesondere in Form von Bohrungen (8), die zur Anbringung der unteren Enden an den Ausfallenden (9) des Rahmens (10) des Zweirads verwendet werden können.

10. Gepäckträger nach einem der Ansprüche 1 bis 9, **dadurch gekennzeichnet, dass** der Gepäckträger das Befestigungselement (1) umfasst, das einen ersten Abschnitt (2), einen zweiten Abschnitt (3) und einen diese verbindenden Querabschnitt (4) aufweist, wobei sich im an dem Zweirad angebrachten Zustand des Gepäckträgers an jeder der beiden Seiten eines Rades jeweils einer der beiden Abschnitte (2, 3) erstreckt.

11. Gepäckträger nach Anspruch 10, **dadurch gekennzeichnet, dass** die Mittel zur Befestigung des Gepäckträgers eine Aufnahme (15) für den Querabschnitt (4) des Befestigungselements (1) aufweisen, wobei die Aufnahme (15) insbesondere zwei Teile (16, 17) aufweist, die an den Querschnitt des Querabschnitts (4) angepasste Aussparungen aufweisen, so dass die Teile (16, 17) zumindest abschnittsweise formschlüssig an dem Querabschnitt (4) anliegen oder anliegen können.

12. Gepäckträger nach einem der Ansprüche 10 oder 11, **dadurch gekennzeichnet, dass** die Mittel zur Befestigung des Gepäckträgers mindestens eine Schraubverbindung aufweisen, insbesondere wobei
- eine erste Schraubverbindung die Teile (16, 17) an den Querabschnitt (4) des Befestigungselements (1) andrückt oder andrücken kann und diesen damit in der Aufnahme (15) festlegt oder festlegen kann, und wobei vorzugsweise die erste Schraubverbindung gleichzeitig den Gepäckträger mit dem Radschützer (11) oder mit einer unter dem Radschützer verlaufenden Strebe (12) verbinden kann, und/oder wobei
- eine zweite Schraubverbindung die Verbindungsmittel (20) mit dem Radschützer verbinden kann.

13. Gepäckträger nach einem der Ansprüche 1 bis 12, **dadurch gekennzeichnet, dass** das mindestens eine Befestigungselement (1) als Rohr ausgebildet ist und/oder dass die Verbindungsmittel (20) aus einem Leichtmetall oder aus einer Leichtmetalllegierung, insbesondere aus Aluminium, bestehen oder dass die Verbindungsmittel (20) ein Leichtmetall oder eine Leichtmetalllegierung, insbesondere Aluminium, umfassen.

14. Anordnung eines Gepäckträgers an einem Zweirad, umfassend einen Gepäckträger nach einem der Ansprüche 1 bis 13 sowie einen Radschützer (11) und eine Strebe (12), wobei der Gepäckträger an dem Radschützer (11) und/oder an der unter dem Radschützer (11) verlaufenden Strebe (12) befestigt ist.

## Claims

1. Luggage rack for a two-wheeled vehicle, in particular for a bicycle, comprising
- at least one elongated mounting element (1) with multiple bends, wherein, when the luggage rack is mounted on the two-wheeled vehicle, a section (2, 3) of the one mounting element (1) extends on each of the two sides of a wheel, or wherein at least two mounting elements are provided and at least one of the at least two mounting elements extends on each of the two sides of the wheel,
- means for attaching the luggage rack to the two-wheeled vehicle,
- connecting means (20), which connect the two sections (2, 3) of the one mounting element (1) or the two mounting elements to one another, wherein the connecting means (20) are designed such that the two sections (2, 3) of the one mounting element (1) or two of the at least two mounting elements are connected to one another in force-fitting and/or form-fitting manner by the connecting means (20),
**characterised in that** the means for attaching the luggage rack to the two-wheeled vehicle comprise means for attaching the luggage racks to a mudguard (11) of the two-wheeled vehicle or to a strut (12) running below the mudguard.

2. Luggage rack according to claim 1, **characterised in that** the connecting means (20) are designed such that the two sections (2, 3) of the one mounting element (1) or two of the at least two mounting elements are connected to each other by the connecting means (20) via at least one screw connection, preferably two screw connections.

3. Luggage rack according to any one of claims 1 or 2, **characterised in that** the connecting means (20) have two sockets (21, 22), in each of which one of the two sections (2, 3) of the one mounting element (1) or one of the at least two mounting elements is arranged and secured, wherein in particular at least one of the sockets (21, 22) or each of the two sockets (21, 22) are formed by two parts, which have recesses (21a, 21b; 22a, 22b) adapted to the cross-section of the mounting element (1), such that the parts can abut against the mounting element (1) in a form-fitting manner at least in sections.

4. Luggage rack according to claim 3, **characterised in that** one of the two sections (2, 3) of the one mounting element (1) or one of the at least two mounting elements is secured in each of the sockets (21, 22) by means of a screw connection, wherein in particular the two parts are pressed against the mounting element (1) by means of the screw connection.

5. Luggage rack according to any one of claims 1 to 4, **characterised in that** the connecting means (20) are configured as an attachment bridge, in particular a strut-shaped attachment bridge, which extends from one side of the wheel to the other side of the wheel when the luggage rack is attached to the two-wheeled vehicle, in particular wherein the sockets (21, 22) are each arranged in an end region of the attachment bridge.

6. Luggage rack according to any one of claims 1 to 5, **characterised in that** the connecting means (20) comprise a cover, which can cover, in particular the upper side of the connecting means (20) when the luggage rack is attached to the two-wheeled vehicle.

7. Luggage rack according to claim 6, **characterised in that**, when the luggage rack is attached to the two-wheeled vehicle, the cover has or can have,
- a marking such as, for example, a logo on its upper side, and/or
- a reflector (33) and/or a rear light on its rear side, and/or
- a badge on its front side, in particular a badge with markings according to DIN EN ISO 11243.

8. Luggage rack according to any one of claims 1 to 7, **characterised in that**, when the luggage rack is attached to the two-wheeled vehicle, the connecting means (20) have or can have,
- a marking such as, for example, a logo on its upper side, and/or
- a reflector (33) and/or a rear light on its rear side, and/or
- a badge on its front side, in particular a badge with markings according to DIN EN ISO 11243.

9. Luggage rack according to any one of claims 1 to 8, **characterised in that** means for attaching the luggage rack to the two-wheeled vehicle, when the luggage rack is attached to the two-wheeled vehicle, are arranged respectively at the lower ends of the two sections (2, 3) of the one mounting element (1) or respectively to the lower ends of the at least two mounting elements, in particular in the form of drilled holes (8), which can be used to attach the lower ends to the dropouts (9) of the frame (10) of the two-wheeled vehicle.

10. Luggage rack according to any one of claims 1 to 9, **characterised in that** the luggage rack comprises the mounting element (1), which has a first section (2), a second section (3) and a transverse section (4) connecting the latter, wherein, when the luggage rack is attached to the two-wheeled vehicle, one of the two sections (2, 3) extends on each of the two sides of a wheel.

11. Luggage rack according to claim 10, **characterised in that** the means for mounting the luggage rack have a socket (15) for the transverse section (4) of the mounting element (1), wherein the socket (15) has, in particular, two parts (16, 17), which have recesses adapted to the cross-section of the transverse section (4), such that the parts (16,17) abut or can abut against the transverse section (4) in a form-fitting manner at least in sections.

12. Luggage rack according to any one of claims 10 or 11, **characterised in that** the means for mounting the luggage rack have at least one screw connection, in particular, wherein
- a first screw connection presses or can press the parts (16, 17) against the transverse section (4) of the mounting element (1) and thereby secure or can secure the latter in the socket (15), and wherein preferably the first screw connection can simultaneously connect the luggage rack to the mudguard (11) or to a strut (12) running below the mudguard, and/or wherein
- a second screw connection can connect the connecting means (20) to the mudguard.

13. Luggage rack according to any one of claims 1 to 12, **characterised in that** the at least one mounting element (1) is configured as a tube and/or **in that** the connecting means (20) consist of a light metal or a light metal alloy, in particular aluminium, or **in that** the connecting means (20) comprise a light metal or a light metal alloy, in particular aluminium.

14. Arrangement of a luggage rack on a two-wheeled vehicle, comprising a luggage rack according to any one of claims 1 to 13, as well as a mudguard (11) and a strut (12), wherein the luggage rack is mounted on the mudguard (11) and/or on the strut (12) running below the mudguard (11).

## Revendications

1. Porte-bagages pour un deux-roues, en particulier pour une bicyclette, comprenant
- au moins un élément de fixation (1) allongé, plié à de multiples reprises, dans lequel respectivement un segment (2, 3) de l'élément de fixation (1) s'étend dans l'état du porte-bagages monté sur le deux-roues au niveau de chacun des deux côtés d'une roue, ou dans lequel au moins deux éléments de fixation sont prévus et au moins un des au moins deux éléments de fixation s'étend sur chacun des deux côtés de la roue,
- des moyens pour le montage du porte-bagages au niveau du deux-roues,
- des moyens de liaison (20) qui relient entre eux les deux segments (2, 3) de l'élément de fixation (1) ou les deux éléments de fixation, dans lequel les moyens de liaison (20) sont conçus de telle manière que par les moyens de liaison (20) les deux segments (2, 3) de l'élément de fixation (1) ou deux des au moins deux éléments de fixation soient reliés entre eux à force et/ou par complémentarité de formes,
**caractérisé en ce que** les moyens de montage du porte-bagages au niveau du deux-roues comportent des moyens de fixation du porte-bagages à un garde-boue (11) du deux-roues ou à une entretoise (12) s'étendant sous le garde-boue.

2. Porte-bagages selon la revendication 1, **caractérisé en ce que** les moyens de liaison (20) sont conçus de telle sorte que, grâce aux moyens de liaison (20), les deux sections (2, 3) d'un élément de fixation (1) ou deux des au moins deux éléments de fixation sont reliés entre eux par au moins une liaison vissée, de préférence deux liaisons vissées.

3. Porte-bagages selon l'une quelconque des revendications 1 ou 2, **caractérisé en ce que** les moyens de liaison (20) présentent deux logements (21, 22) dans lesquels respectivement un des deux segments (2, 3) de l'élément de fixation (1) ou respectivement l'un des au moins deux éléments de fixation est agencé et fixé ou peut être agencé et fixé, dans lequel en particulier au moins un des logements (21, 22) ou chacun des deux logements (21, 22) est formé par deux parties qui présentent des évidements (21a, 21b ; 22a, 22b) adaptés à la section transversale de l'élément de fixation (1), de sorte que les parties puisent reposer au moins par sections par complémentarité de formes contre l'élément de fixation (1).

4. Porte-bagages selon la revendication 3, **caractérisé en ce que** la fixation d'un des deux segments (2, 3) de l'élément de fixation (1) ou de l'un des au moins deux éléments de fixation dans chacun des logements (21, 22) est effectuée par une liaison vissée, dans lequel en particulier les deux parties sont pressées contre l'élément de fixation (1) par la liaison vissée.

5. Porte-bagages selon l'une quelconque des revendications 1 à 4, **caractérisé en ce que** les moyens de liaison (20) sont réalisés comme un pont de fixation, en particulier un pont de fixation en forme de traverse qui s'étend dans l'état monté au niveau du deux-roues du porte-bagages d'un côté de la roue à l'autre côté de la roue, en particulier dans lequel les logements (21, 22) sont agencés respectivement dans une zone côté extrémité du pont de fixation.

6. Porte-bagages selon l'une quelconque des revendications 1 à 5, **caractérisé en ce que** les moyens de liaison (20) comportent un recouvrement qui peut recouvrir dans l'état monté au niveau du deux-roues du porte-bagages, en particulier le côté supérieur des moyens de liaison (20).

7. Porte-bagages selon la revendication 6, **caractérisé en ce que** le recouvrement présente ou peut présenter dans l'état monté au niveau du deux-roues du porte-bagages
- sur son côté supérieur une caractérisation telle qu'un logo et/ou
- sur son côté arrière un catadioptre (33) et/ou un feu arrière et/ou
- sur son côté avant une plaquette, en particulier une plaquette avec des caractérisations selon la norme DIN EN ISO 11243.

8. Porte-bagages selon l'une quelconque des revendications 1 à 7, **caractérisé en ce que** les moyens de liaison (20) présentent ou peuvent présenter dans l'état monté au niveau du deux-roues du porte-bagages
- sur son côté supérieur une caractérisation telle qu'un logo et/ou
- sur son côté arrière un catadioptre (33) et/ou un feu arrière et/ou
- sur son côté avant une plaquette, en particulier une plaquette avec des caractérisations selon la norme DIN EN ISO 11243.

9. Porte-bagages selon l'une quelconque des revendications 1 à 8, **caractérisé en ce que** des moyens pour le montage du porte-bagages au niveau du deux-roues sont agencés dans l'état monté au niveau du deux-roues du porte-bagages respectivement aux extrémités inférieures des deux segments (2, 3) de l'élément de fixation (1) en particulier sous la forme de perçages (8) qui peuvent être utilisés pour le montage des extrémités inférieures aux extrémités de dérailleur (9) du cadre (10) du deux-roues,

10. Porte-bagages selon l'une quelconque des revendications 1 à 9, **caractérisé en ce que** le porte-bagages comprend l'élément de fixation (1) qui présente un premier segment (2), un second segment (3) et un segment transversal (4) les reliant, dans lequel un des deux segments (2, 3) s'étend dans l'état du porte-bagages monté sur le deux-roues au niveau de chacun des deux côtés d'une roue.

11. Porte-bagages selon la revendication 10, **caractérisé en ce que** les moyens de fixation du porte-bagages présentent un logement (15) pour le segment transversal (4) de l'élément de fixation (1), dans lequel le logement (15) présente en particulier deux parties (16, 17) qui présentent des évidements adaptés à la section transversale du segment transversal (4) de sorte que les parties (16, 17) reposent ou puissent reposer au moins par sections à complémentarité de formes contre le segment transversal (4).

12. Porte-bagages selon l'une quelconque des revendications 10 ou 11, **caractérisé en ce que** les moyens de fixation du porte-bagages présentent au moins une liaison vissée, en particulier dans lequel
- une première liaison vissée presse ou peut presser les parties (16, 17) contre le segment transversal (4) de l'élément de fixation (1) et fixe ou peut fixer celui-ci ainsi dans le logement (15), et dans lequel de préférence la première liaison vissée peut relier simultanément le porte-bagages au garde-boue (11) ou à une entretoise (12) s'étendant sous le garde-boue, et/ou dans lequel
- une seconde liaison vissée peut relier les moyens de liaison (20) au garde-boue.

13. Porte-bagages selon l'une quelconque des revendications 1 à 12, **caractérisé en ce que** l'au moins un élément de fixation (1) est réalisé comme tube et/ou que les moyens de liaison (20) consistent en un métal léger ou un alliage de métal léger, en particulier en aluminium ou que les moyens de liaison (20) comportent un métal léger ou un alliage de métal léger, en particulier de l'aluminium.

14. Agencement d'un porte-bagages au niveau d'un deux-roues, comprenant un porte-bagages selon l'une quelconque des revendications 1 à 13 ainsi qu'un garde-boue (11) et une entretoise (12), dans lequel le porte-bagages est fixé au garde-boue (11) et/ou à l'entretoise (12) s'étendant sous le garde-boue (11).
